# EUROPEAN PATENT SPECIFICATION

(11) **EP 3 355 093 B1**
(45) Date of publication and mention of the grant of the patent: **30.12.2020**
(21) Application number: 18162370.3
(22) Date of filing: 22.11.2007
(51) Int. Cl.: G02B 7/02, G03B 3/10, G11B 7/09, H02K 41/035

(54) **LENS DRIVING APPARATUS**
LINSENANSTEUERUNGSVORRICHTUNG
APPAREIL DE COMMANDE DE LENTILLE

(30) Priority: 23.11.2006 KR 20060116317
(43) Date of publication of application: 01.08.2018
(60) Divisional application: 20202276.0
(62) Document number(s) of the earlier application(s) in accordance with Art. 76 EPC: 14183960.5 / 2 824 813; 07834206.0 / 2 089 958
(73) Proprietor: LG Innotek Co., Ltd., Seoul 04637 (KR)
(72) Inventor: KIM, Ji Hoon, Gunpo-si Gyeonggi-do 435-705 (KR)
(74) Representative: DREISS Patentanwälte PartG mbB

(56) References cited:
- JP-A- 2002 352 449
- JP-A- 2005 173 431
- KR-B1- 100 548 869
- TW-U- M 290 574

## Description

### Technical Field

The present invention relates to a lens driving apparatus.

### Background Art

Recently, as electronic appliances have multi-functions, various electronic appliances having cameras therein, such as MP3 players, mobile communication terminals and PDAs, have been widely used.

As electronic appliances having cameras therein are manufactured in a small size, parts for providing camera functions must also be manufactured in a small size.

Further, since electronic appliances having cameras therein may be easily exposed to external environment or impact in terms of the characteristics of portable electronic appliances, external impurities may easily penetrate into the electronic appliances or the electronic appliances may be easily broken by the impact. Lens driving apparatuses are described e.g. in JP 2002 352449 A, TW M 290 574 U, KR 100 548 869 B1 and DE 20 2006 009115 U1.

### Disclosure of Invention Technical Problem

The embodiment provides a lens driving apparatus which can be designed in a simple structure and manufactured in a small size.

The embodiment provides a lens driving apparatus having high resistance against impact and preventing penetration of external impurities.

### Technical Solution

A lens driving apparatus according to the invention is defined in claim 1.

### Advantageous Effects

According to the lens driving apparatus of the embodiment, a yoke is directly coupled to a base and parts are installed in a space formed in an inner portion of the base and the yoke. Accordingly, since an additional case is not necessary, the number of parts is reduced, an assembly procedure is simplified, and thus the manufacturing cost can be saved.

Further, according to the lens driving apparatus of the embodiment, the base is coupled to the yoke while maintaining a sealing status by locking holes of the base and locking protrusions of the yoke. That is, any gap does not exist in the sides of the base and the yoke, a hole of the yoke is shielded by a lens module, and a through hole of the base is closely coupled to an electronic appliance, so that impurities can be prevented from penetrating into the inner space formed be the base and the yoke. As a result, the parts are not damaged by the impurities.

Furthermore, when a prism magnet is used, since the manufacturing cost is saved as compared with a case of using a ring-shaped magnet, the economical efficiency can be improved.

### Brief Description of the Drawings

FIG. 1 is an exploded perspective view showing a lens driving apparatus according to the embodiment;
FIG. 2 is a sectional view showing the lens driving apparatus in FIG. 1;
FIG. 3 is a perspective view showing a state in which a magnet and a coil are installed at the yoke in FIG. 1; and
FIG. 4 is a perspective view showing a coupling state of the yoke and the base in FIG. 1.

### Mode for the Invention

Hereinafter, a lens driving apparatus according to an embodiment will be described with reference to accompanying drawings.

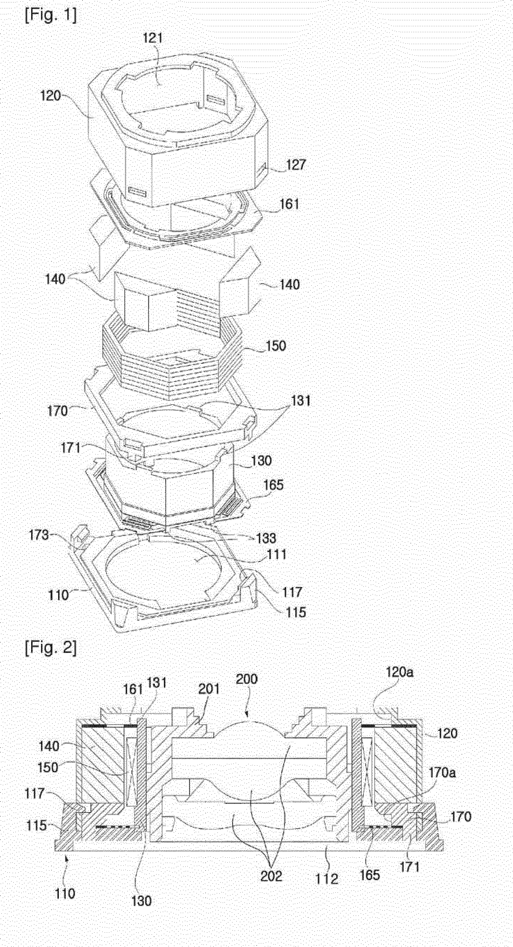

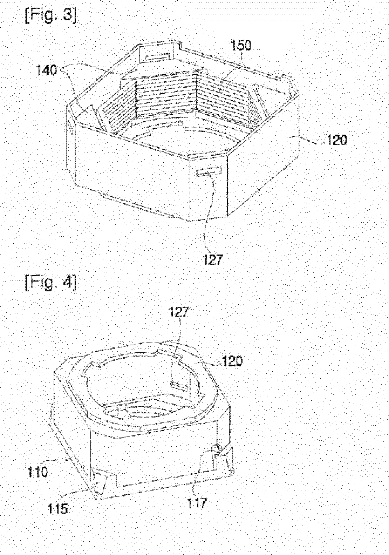

FIG. 1 is an exploded perspective view showing the lens driving apparatus according to the embodiment, FIG. 2 is a sectional view showing the lens driving apparatus in FIG. 1, and FIG. 3 is a perspective view showing a state in which a magnet and a coil are installed at the yoke in FIG. 1.

As shown in FIGS. 1 and 2, the lens driving apparatus according to the embodiment comprises a base 110 and a metal yoke 120 which are coupled to each other to form a predetermined space.

The base 110 has a disc shape or a polygonal plate shape and is formed at the central portion thereof with a through hole 111. The bottom surface of the base 110 is coupled to an electronic appliance (not shown) and a circuit substrate 112 provided with an image sensor (not shown) is arranged in the through hole 111.

The yoke 120 is coupled to the base 110 to serve as a case for protecting parts. The yoke 120 has an upper surface, at which a hole 121 allowing entrance of a lens module 200 is formed, an opened bottom surface making contact with the upper surface of the base 110, and closed lateral side surfaces.

The side surfaces of the lens driving apparatus according to the embodiment are closed by the base 110 and the yoke 120. Accordingly, since an additional case for protecting the lens driving apparatus is not necessary, the structure of the lens driving apparatus can be simplified. Further, since the side surfaces of the lens driving apparatus are closed, external impurities cannot penetrate into the inner side of the lens driving apparatus.

A ring-shaped bobbin 130 that goes in and out the hole 121 is movably installed at the inner side of the yoke 120. The lens module 200 provided with a lens 202 and a support 201 for supporting the lens 202 is coupled to the inner peripheral surface of the bobbin 130.

The bobbin 130 includes an outer surface having a circular or a polygonal shape cor responding to the yoke 120, and an inner surface having a circular shape corresponding to the outer surface of the lens module 200. According to the embodiment, the bobbin 130 includes an outer surface having an octagonal shape.

Magnets 140 are fixed to the inner peripheral surface of the yoke 120, and a coil 150 is wound around the outer peripheral surface of the bobbin 130 while facing the magnets 140.

The magnet 140 has a circular or a polygonal shape corresponding to the yoke 120.

As shown in FIGS. 1 and 3, when the yoke 120 is a polygonal case, a plurality of prism magnets 140 are prepared and three sides of each magnet 140 make contact with the inner peripheral surface of the yoke 120.

In the lens driving apparatus according to the embodiment, since the magnets 140 are installed at four edges of the yoke 120, respectively, an empty space between the yoke 120 and the coil 150 can be effectively utilized. Accordingly, the lens driving apparatus can be manufactured in a smaller size. Further, since the prism magnet 140 is inexpensive as compared with a ring-shaped magnet, the lens driving apparatus with a low price can be manufactured.

Since the coil 150 is wound around the outer peripheral surface of the bobbin 130, the coil 150 has a circular or a polygonal shape corresponding to the outer surface of the bobbin 130. If the coil 150 has a polygonal shape and the magnet 140 has a circular shape, the distance between the coil 150 and the magnet 140 becomes non-uniform.

Accordingly, when the coil 150 has a polygonal shape, the magnet 140 has a prism shape as shown in FIGS. 1 and 3.

As electric current is applied to the coil 150, the coil 150 moves upward according to the interaction of the electric field generated by the coil 150 and the magnetic field generated by the magnet 140, and thus the bobbin 130 moves upward. Accordingly, the lens module 200 coupled to the bobbin 130 also moves upward.

In addition, if the electric current is not applied to the coil 150, the bobbin 130 moves downward. To this end, upper and lower leaf springs 161 and 165 having a coil structure are installed at the upper and lower portions of the bobbin 130 in order to provide restoration force for returning the bobbin 130 to the initial state.

At this time, the outer portion of the upper spring 161 is inserted between the yoke 120 and the upper surface of the magnet 140. Further, the inner portion of the upper spring 161 is inserted into first support protrusions 131 formed on the upper end surface of the bobbin 130. Accordingly, the upper spring 161 can be prevented from being rotated and moved due to external impact.

The inner portion of the lower spring 165 is integrally formed with the bobbin 130 through injection molding, and the outer portion of the lower spring 165 is inserted between the bottom surface of a spacer 170 and the base 110. Further, second support protrusions 133 that make contact with the inner peripheral surface of the through hole 111 formed in the base 110 are formed on the lower end surface of the bobbin 130. The inner peripheral surface of through hole 111 comprises recesses 300, 301 for the second support protrusions 133. The second support protrusions 133 guide and support the bobbin 130 such that the bobbin 130 can be coupled to another element at an exact position and exactly move upward and downward.

The spacer 170 is installed at the base 110 below the magnets 140 and the outer surface of the lower spring 165 is inserted between the lower surface of the spacer 170 and the base 110. That is, the outer portion of the lower spring 165 is supported between the spacer 170 and the base 110, and the inner portion of the lower spring 165 is integrally formed with the bobbin 130, so that the lower spring 165 can be prevented from being rotated and moved due to external impact.

Further, the spacer 170 has insertion protrusions 171 used for firm coupling and movement prevention of the spacer 170, and the base 110 has support holes 173 into which the insertion protrusions 171 are inserted.

The yoke 120 and the spacer 170 have step sections 120a and 170a, respectively, as shown in FIG. 2. the step sections 120a and 170a provide a space for movement of the middle parts of the upper and lower leaf springs 161 and 165.

Hereinafter, a coupling structure of the base 110 and the yok2 120 will be described with reference to FIGS. 1, 2 and 4.

FIG. 4 is a perspective view showing a coupling state of the yoke and the base in FIG. 1.

As shown in FIG. 4, the base 110 has a plurality of protrusion plates 115 protruding upward on the outer surface thereof, and locking protrusions 117 are formed at the protrusion plates 115, respectively. Further, the yoke 120 has locking holes 127 at the sides thereof, into which the locking protrusions 117 are inserted.

The base 110 is closely coupled to the yoke 120 by using the locking protrusions 117 and the locking holes 127.

### Industrial Applicability

The lens driving apparatus according to the embodiment can be manufactured in a small size, can prevent external impurities from penetrating into the inner portion of the lens driving apparatus, and is not broken due to external impact.

Further, the lens driving apparatus according to the embodiment can be applied to both cameras and various electronic appliances provided with the cameras.

## Claims

1. A lens driving apparatus comprising:
a base (110),
a through hole (111) formed in the base (110);
a yoke (120) coupled to the base (110), having an upper surface formed with a hole (121), a closed side surface, and an opened bottom surface;
a bobbin (130) for carrying a lens module (200), wherein the bobbin (130) is movably installed in the yoke (120);
a magnet (140) fixed to an inner portion of the yoke (120);
a coil (150) fixed to an outer portion of the bobbin (130) while facing the magnet (140); and
springs (161, 165) coupled to the bobbin (130) to provide a restoration force to the bobbin (130), wherein the springs (161, 165) comprise an upper spring (161) coupled to an upper portion of the bobbin (130) and a lower spring (165) coupled to a lower portion of the bobbin (130),
**characterized in that**
first support protrusions (131) are formed on the upper portion of the bobbin (130), wherein the upper spring(161) comprises an inner portion, an outer portion, and an intermediate portion connecting the inner portion and the outer portion, and the inner portion of the upper spring (161) is inserted into the first support protrusions (131),
wherein second support protrusions (133) are formed at the lower portion of the bobbin (130) to make contact with an inner peripheral surface of the through hole (111), and
wherein the second support protrusions (133) are configured to guide and support the bobbin (130).

2. The lens driving apparatus of claim 1, wherein the through hole (111) comprises sections (301) for the second support protrusions (133), and
wherein the inner peripheral surface of the through hole (111) comprises an inner peripheral surface of the sections (301).

3. The lens driving apparatus of claim 2, wherein the sections (301) receive the second support protrusions (133).

4. The lens driving apparatus of any one of claims 1 to 3, wherein the outer portion of the upper spring (161) is inserted between the yoke (120) and the magnet (140), and the inner portion of the upper spring (161) is coupled to the bobbin (130).

5. The lens driving apparatus of any one of claims 1 to 4, wherein the lower spring (165) has one side integrally formed with the bobbin (130) through injection molding.

6. The lens driving apparatus of one of the preceding claims, wherein a spacer (170) is installed below the magnet (140) and coupled to the base (110).

7. The lens driving apparatus of claim 6, wherein the spacer (170) comprises insertion protrusions (171) and the base (110) comprises support holes (173) into which the insertion protrusions (171) are inserted.

8. The lens driving apparatus of one of the preceding claims, wherein the base (110) has a plurality of protrusion plates (115) protruding upward on the outer surface thereof, and locking protrusions (117) are formed at the protrusion plates (115), respectively, wherein the yoke (120) has locking holes (127) at the sides thereof, into which the locking protrusions (117) are inserted.

9. The lens driving apparatus of one of the preceding claims, wherein the magnets (140) are disposed at edges of the yoke (120), respectively, wherein each of the magnets (140) has a prism shape, and wherein the coil (150) has a polygonal shape.

10. The lens driving apparatus of one of the preceding claims,
wherein the coil (150) includes eight outer surfaces,
wherein the magnets (140) include four magnets, the four magnets facing four outer surfaces of the eight outer surfaces of the coil (150), respectively,
wherein the yoke is a metal yoke.

11. A camera comprising:
the lens driving apparatus as claimed in any one of claims 1 to 10; and
a lens (202) coupled to the bobbin (110) of the lens driving apparatus.

12. An electronic appliance comprising the camera according to claim 11.

## Patentansprüche

1. Objektivantriebsvorrichtung, umfassend:
eine Basis (110), ein Durchgangsloch (111), das in der Basis (110) ausgebildet ist;
ein mit der Basis (110) gekoppeltes Joch (120) mit einer mit einem Loch (121) ausgebildeten oberen Fläche, einer geschlossenen Seitenfläche und einer geöffneten Bodenfläche;
eine Spule (130) zum Tragen eines Objektivmoduls (200), wobei die Spule (130) beweglich in dem Joch (120) installiert ist;
einen Magneten (140), der an einem Innenteil des Jochs (120) befestigt ist;
eine Wicklung (150), die an einem Außenteil der Spule (130) befestigt und dem Magneten (140) zugewandt ist; und
Federn (161, 165), die mit der Spule (130) gekoppelt sind, um eine Rückstellkraft auf die Spule (130) auszuüben, wobei die Federn (161, 165) eine obere Feder (161), die mit einem oberen Teil der Spule (130) gekoppelt ist, und eine untere Feder (165) umfassen, die mit einem unteren Teil der Spule (130) gekoppelt ist, **dadurch gekennzeichnet, dass** am oberen Teil der Spule (130) erste Stützvorsprünge (131) ausgebildet sind, wobei die obere Feder (161) einen Innenteil, einen Außenteil und einen Zwischenteil umfasst, der den Innenteil und den Außenteil verbindet, und der Innenteil der oberen Feder (161) in die ersten Stützvorsprünge (131) eingebracht ist, wobei die zweiten Stützvorsprünge (133) am unteren Teil der Spule (130) ausgebildet sind, um Kontakt mit einer Innenumfangsfläche des Durchgangslochs (111) herzustellen, und wobei die zweiten Stützvorsprünge (133) dazu konfiguriert sind, die Spule (130) zu führen und zu stützen.

2. Objektivantriebsvorrichtung nach Anspruch 1, wobei das Durchgangsloch (111) Abschnitte (301) für die zweiten Stützvorsprünge (133) umfasst und wobei die Innenumfangsfläche des Durchgangslochs (111) eine Innenumfangsfläche der Abschnitte (301) umfasst.

3. Objektivantriebsvorrichtung nach Anspruch 2, wobei die Abschnitte (301) die zweiten Stützvorsprünge (133) aufnehmen.

4. Objektivantriebsvorrichtung nach einem der Ansprüche 1 bis 3, wobei der Außenteil der oberen Feder (161) zwischen dem Joch (120) und dem Magneten (140) eingebracht und der Innenteil der oberen Feder (161) mit der Spule (130) gekoppelt ist.

5. Objektivantriebsvorrichtung nach einem der Ansprüche 1 bis 4, wobei die untere Feder (165) eine Seite aufweist, die durch Spritzgießen einstückig mit der Spule (130) ausgebildet ist.

6. Objektivantriebsvorrichtung nach einem der vorhergehenden Ansprüche, wobei ein Abstandshalter (170) unterhalb des Magneten (140) installiert und mit der Basis (110) gekoppelt ist.

7. Objektivantriebsvorrichtung nach Anspruch 6, wobei der Abstandshalter (170) Einbringvorsprünge (171) umfasst und die Basis (110) Stützlöcher (173) umfasst, in die die Einbringvorsprünge (171) eingebracht sind.

8. Objektivantriebsvorrichtung nach einem der vorhergehenden Ansprüche, wobei die Basis (110) mehrere Vorsprungsplatten (115) aufweist, die an ihrer Außenfläche nach oben vorstehen, und an den Vorsprungsplatten (115) jeweils Verriegelungsvorsprünge (117) ausgebildet sind, wobei das Joch (120) an seinen Seiten Verriegelungslöcher (127) aufweist, in die die Verriegelungsvorsprünge (117) eingebracht sind.

9. Objektivantriebsvorrichtung nach einem der vorhergehenden Ansprüche, wobei die Magnete (140) jeweils an Kanten des Jochs (120) angeordnet sind, wobei jeder der Magnete (140) eine Prismenform aufweist und wobei die Wicklung (150) eine polygonale Form aufweist.

10. Objektivantriebsvorrichtung nach einem der vorhergehenden Ansprüche, wobei die Wicklung (150) acht Außenflächen beinhaltet, wobei die Magnete (140) vier Magnete beinhalten, wobei die vier Magnete jeweils vier Außenflächen der acht Außenflächen der Wicklung (150) zugewandt sind, wobei das Joch ein Metalljoch ist.

11. Kamera, umfassend:
die Objektivantriebsvorrichtung nach einem der Ansprüche 1 bis 10; und
ein Objektiv (202), das mit der Spule (110) der Objektivantriebsvorrichtung gekoppelt ist.

12. Elektronisches Gerät, umfassend die Kamera nach Anspruch 11.

## Revendications

1. Appareil d'entraînement d'objectif, comprenant :
une base (110), un trou traversant (111) formé dans la base (110) ;
une culasse (120) accouplée à la base (110), présentant une surface supérieure pourvue d'un trou (121), une surface latérale fermée et une surface inférieure ouverte ;
une bobine (130) destinée à transporter un module d'objectif (200), la bobine (130) étant installée de façon mobile dans la culasse (120) ;
un aimant (140) fixé à une partie intérieure de la culasse (120) ;
un enroulement (150) fixé à une partie extérieure de la bobine (130) tout en faisant face à l'aimant (140) ; et
des ressorts (161, 165) accouplés à la bobine (130) pour exercer une force de rappel sur la bobine (130), les ressorts (161, 165) comprenant un ressort supérieur (161), accouplé à une partie supérieure de la bobine (130), et un ressort inférieur (165), accouplé à une partie inférieure de la bobine (130), **caractérisé en ce que** des premières saillies de soutien (131) sont formées sur la partie supérieure de la bobine (130), le ressort supérieur (161) comprenant une partie intérieure, une partie extérieure et une partie intermédiaire reliant la partie intérieure et la partie extérieure, et **en ce que** la partie intérieure du ressort supérieur (161) est insérée dans les premières saillies de soutien (131), des secondes saillies de soutien (133) étant formées au niveau de la partie inférieure de la bobine (130) de façon à entrer en contact avec une surface périphérique intérieure du trou traversant (111) et les secondes saillies de soutien (133) étant conçues pour guider et pour soutenir la bobine (130).

2. Appareil d'entraînement d'objectif selon la revendication 1, dans lequel le trou traversant (111) comprend des sections (301) destinées aux secondes saillies de soutien (133) et dans lequel la surface périphérique intérieure du trou traversant (111) comprend une surface périphérique intérieure des sections (301).

3. Appareil d'entraînement d'objectif selon la revendication 2, dans lequel les sections (301) reçoivent les secondes saillies de soutien (133).

4. Appareil d'entraînement d'objectif selon l'une quelconque des revendications 1 à 3, dans lequel la partie extérieure du ressort supérieur (161) est insérée entre la culasse (120) et l'aimant (140) et où la partie intérieure du ressort supérieur (161) est accouplée à la bobine (130).

5. Appareil d'entraînement d'objectif selon l'une quelconque des revendications 1 à 4, dans lequel le ressort inférieur (165) présente un côté intégré à la bobine (130) par moulage par injection.

6. Appareil d'entraînement d'objectif selon l'une quelconque des revendications précédentes, dans lequel un espaceur (170) est installé sous l'aimant (140) et accouplé à la base (110).

7. Appareil d'entraînement d'objectif selon la revendication 6, dans lequel l'espaceur (170) comprend des saillies d'insertion (171) et où la base (110) comprend des trous de soutien (173) dans lesquels sont insérées les saillies d'insertion (171).

8. Appareil d'entraînement d'objectif selon l'une quelconque des revendications précédentes, dans lequel la base (110) présente une pluralité de plaques de saillie (115) faisant saillie vers le haut sur sa surface extérieure, des saillies de verrouillage (117) étant respectivement formées au niveau des plaques de saillie (115), la culasse (120) présentant des trous de verrouillage (127) sur ses côtés, trous dans lesquels sont insérées les saillies de verrouillage (117).

9. Appareil d'entraînement d'objectif selon l'une quelconque des revendications précédentes, dans lequel les aimants (140) sont respectivement disposés sur les bords de la culasse (120), chacun des aimants (140) présentant une forme de prisme et l'enroulement (150) présentant une forme polygonale.

10. Appareil d'entraînement d'objectif selon l'une quelconque des revendications précédentes, dans lequel l'enroulement (150) comprend huit surfaces extérieures, les aimants (140) comportant quatre aimants, les quatre aimants faisant respectivement face à quatre surfaces extérieures des huit surfaces extérieures de l'enroulement (150), la culasse étant une culasse métallique.

11. Dispositif de prise de vues comprenant :
l'appareil d'entraînement d'objectif selon l'une quelconque des revendications 1 à 10 ; et
un objectif (202) accouplé à la bobine (110) de l'appareil d'entraînement 'objectif.

12. Dispositif électronique comprenant le dispositif de prise de vues selon la revendication 11.
